# EUROPÄISCHE PATENTSCHRIFT

(11) **EP 1 863 694 B1**
(45) Veröffentlichungstag und Bekanntmachung des Hinweises auf die Patenterteilung: **18.11.2009**
(21) Anmeldenummer: 06705418.9
(22) Anmeldetag: 29.03.2006
(51) Int. Cl.: B62B 5/02, A61G 5/06, B60B 33/00

(54) **ROLLSTUHL MIT MINDESTENS EINER SCHWENKRADEINHEIT**
WHEELCHAIR COMPRISING AT LEAST ONE SWIVEL WHEEL UNIT
CHAISE ROULANTE COMPRENANT UNE UNITE A ROUE PIVOTANTE

(30) Priorität: 31.03.2005 CH 5802005
(43) Veröffentlichungstag der Anmeldung: 12.12.2007
(73) Patentinhaber: Degonda-Rehab S.A., 1001 Lausanne (CH)
(72) Erfinder: HUNZIKER, Kurt, CH-3612 Steeffisburg (CH)
(74) Vertreter: Hasler, Erich
(86) Internationale Anmeldenummer: PCT/CH2006/000178
(87) Internationale Veröffentlichungsnummer: WO 2006/102781

(56) Entgegenhaltungen:
- WO-A-00/08910
- WO-A-90/01441
- DE-A1- 1 952 821
- DE-C- 926 528
- US-A- 3 827 718
- US-A- 5 482 326
- US-A- 5 655 615
- US-B1- 6 293 560

## Beschreibung

Die Erfindung betrifft einen Rollstuhl mit mindestens ein Schwenkradeinheit mit mindestens einem um eine vertikale Schwenkachse frei verschwenkbarem Schwenkrad. Bei Schwenkradeinheiten ist die Achse des Schwenkrads in einem Abstand von der vertikalen Schwenkachse angeordnet Dabei ist wesentlich, dass bei seitlich auf das Schwenkrad einwirkenden Kräften ungehindert eine Schwenkbewegung um die vertikale Schwenkachse erfolgen kann. Dies hat zur Folge, dass sich das Schwenkrad immer entsprechend der eingeschlagenen Fahrtrichtung einstellt, also in Fahrtrichtung nachläuft, was z.Bsp. in den englischen Bezeichnungen "Caster, Castor, Caster wheel, castoring wheel" zum Ausdruck gebracht wird.

Solche Schwenkradeinheiten finden schon sei Jahrzehnten Anwendung bei einer Reihe von fahrbaren Objekten, darunter auch Rollstühlen. Wenn hier von Rollstühlen die Rede ist, so wird dies allgemein im Sinne von Fahrzeugen für Behinderte verstanden.

Ein frühes Beispiel der Verwendung von Schwenkradeinheiten bietet die US 1359145 aus dem Jahre 1920. Schwenkradeinheiten werden auch schon seit längerer Zeit bei Rollstühlen verwendet. So zeigen beispielsweise die US 3 264 658 und 6 712 369 die Verwendung als Vorderräder, die US 6129165 die Verwendung als Hinterrad und die US 5 964 473 die gleichzeitige Verwendung als Vorderräder und Hinterräder. Die bei den angeführten Anwendungsbeispielen verwendeten Schwenkradeinheiten stellen in der Regel im Handel erhältliche Standardprodukte dar, die meist einfach zu montieren sind. In der Regel weisen sie einen Drehzapfen auf, der in ein Lager des fahrbaren Gegenstands eingesteckt werden kann. Bei anderen Schwenkradeinheiten gehört das Lager für den Drehzapfen dazu und ist beispielsweise mit Schrauben am Gegenstand befestigbar, der mit solchen Schwenkradeinheiten versehen werden soll.

Bei Bürostühlen weisen die Schwenkräder relativ kleine Durchmesser auf. Bei Rollstühlen hingegen sind grössere Schwenkraddurchmesser erwünscht, damit mit dem Rollstuhl auch Hindernisse überwunden werden können. Je grösser der Raddurchmesser ist, desto leichter lässt sich ein Hindernis überwinden. Aus Platzgründen kann jedoch der Raddurchmesser nicht immer so dimensioniert werden, wie es zur Überwindung von Hindernissen wünschbar wäre.

Um diesen Nachteil zu vermeiden wird in der FR 2 345 320 eine Radeinheit vorgeschlagen, bei der in einem Support drei Radpaare angeordnet sind, von welchen ein erstes Radpaar Bodenkontakt macht. Je ein weiteres Radpaar von sogenannten Heberädern ist vor bzw. hinter dem ersten Radpaar erhöht angeordnet und steht nicht in Bodenkontakt. Trifft nun ein mit solchen Radeinheiten versehenes Objekt auf ein Hindernis auf, so steigt das weitere Radpaar auf das Hindernis, so dass das erste Radpaar angehoben wird und auf das Hindernis steigen kann. Die beschriebene Radeinheit ist nicht als Schwenkradeinheit ausgebildet. Die genannte Druckschrift ist aber insofern interessant als sie die mathematische Grundlage für die Verwendung eines Heberads als Hilfe zur Überwindung eines Hindernisses liefert.

Während bei der FR 2 345 320 das in Bodenkontakt stehende Rad in einem einzigen Schritt vom Boden abgehoben wird, offenbart die EP 1323 401 eine Radeinheit, bei der bei der Überwindung eines Hindernisses bis zu vier, nacheinander angeordnete Heberäder das in Bodenkontakt stehende Rad in bis zu vier Schritten immer weiter vom Boden abheben. Diese Radeinheit weist einen vertikalen Schraubenbolzen auf, welcher zur Befestigung mittels einer Mutter an der Vorderachse eines Rollstuhls dient. Es finden sich keine Anhaltspunkte für eine Ausbildung als Schwenkrad.

Seit einiger Zeit erfreuen sich Rollstühle mit Mittenantrieb grosser Beliebtheit. Solche Rollstühle haben den Vorteil, dass sie auf engem Raum, z.Bsp. in einer Aufzugskabine, gewendet werden können. Um auf engem Raum zu wenden, werden die beiden Mittenräder in einander entgegengesetzten Richtungen gedreht. Dabei dürfen natürlich die Vorderräder und die Hinterräder das Wenden nicht behindern. Sie werden deshalb als Schwenkräder ausgebildet, wie dies beispielsweise die US 6 712 369 und die US 5 964 473 zeigen. Aus Platzgründen haben jedoch die Vorderräder einen relativ kleinen Durchmesser, so dass mit diesen Rollstühlen nur relativ kleine Hindernisse überwunden werden können, wenn nicht noch weitere Massnahmen vorgesehen werden.

So weist der Rollstuhl gemäss der US 6 712 369 einen Federmechanismus für die Hinterräder auf, der es erlaubt, die Vorderräder anzuheben. Beim Rollstuhl gemäss den Figuren 1 bis 8 der US 5 964 473 (WO 96/15752) wird dagegen von Heberädern Gebrauch gemacht, welche auf beiden Seiten des Rollstuhls im Abstand von dem als Schwenkrad ausgebildeten Vorderrad angeordnet sind. Ihre Hebefunktion wird aber dadurch beeinträchtigt, dass sie federnd montiert sind und somit beim Auftreffen auf ein Hindernis etwas nach oben verschwenkt werden bevor sie das Schwenkrad anheben. Wie der WO 96/15752 ferner auf Seite 8, Zeile 8 bis 16, zu entnehmen ist, ist das vordere Schwenkrad in einer Gabel angeordnet, die sich frei um eine Achse an einem mittleren Tragarm drehen kann, der seinerseits mittels eines Federgelenks vom Typ "ROSTA" am Fahrgestell befestigt ist.

Diese Konstruktion mit einem separatem Schwenkrad und separaten Heberädern, welche mittels drei Tragarmen und drei Federgelenken am Fahrgestell befestigt sind, ist kompliziert und teuer und nimmt viel Platz in Anspruch, was beim Gebrauch des Rollstuhls hindernd ist. Die beschriebene Konstruktion hat zudem den Nachteil, dass wegen den federnden Tragarmen, die Heberäder das Schwenkrad nicht so weit anheben können als dies theoretisch möglich wäre.

An der zitierten Stelle wird auch noch das im Handel erhältliche "ROSTA" (TM) Federelement näher beschrieben. Dieses besteht aus zwei quadratischen Rohrstücken mit unterschiedlichen Abmessungen, wobei das kleinere Rohrstück um 45 Grad verdreht im Innern des grösseren Rohrstücks durch Gummiblöcke gehalten wird. Diese erlauben eine limitierte Drehung um die Lagerachse, wobei die Elastizität der Gummiblöcke eine Federkraft ausübt, welche die Tendenz hat, das innere Rohrstück in die Ursprungslage zurückzudrehen. In der CH 681 772 wird das "ROSTA"-Federelement auch unter Bezugnahme auf eine Zeichnung beschrieben.

Aus der US-A 3,827,718 ist seit über dreissig Jahren ein Rollstuhl bekannt, dessen vorderen Räder Einheiten mit jeweils zwei Schwenkrädem an einem gemeinsamen Pendelrahmen sind. Wenn eines der beiden Schwenkräder über eine Kante läuft, wird der Pendelrahmen verschwenkt. Der Verschwenken des Pendelrahmens bewirkt eine Bremsung, um die Vorwärtsbewegung des Rollstuhls zu stoppen. Die Bremsung kann eine Rückwärtsbewegung zulassen. Eine solche Konstruktion ist für das Überwinden von Hindernissen hinderlich.

Vor ebenfalls mehr als dreissig Jahren wurde durch die DE 1952 821 eine Radaufhängung für geländegängige Fahrzeuge vorgeschlagen, bei welcher an einem Balancehebel zwei Räder hintereinander angeordnet sind. Bei einem Fahrzeug sind vier solche Radaufhängungen vorgesehen, zwei vorn und zwei hinten. Die vorderen Radaufhängungen sind durch ein Steuerrad steuerbar, die hinteren sind starr am Chassis befestigt. Bei gefedertem Fahren des Fahrzeugs nimmt das vordere Rad der Radanordnung eine Mittelstellung ein, damit genügende Federwege für das Ein- und Ausfedern nach oben und unten vorhanden sind. In dieser Mittelstellung liegt die Achse des hinteren Rades hinter der vertikalen Lenkachse der Radanordnung.

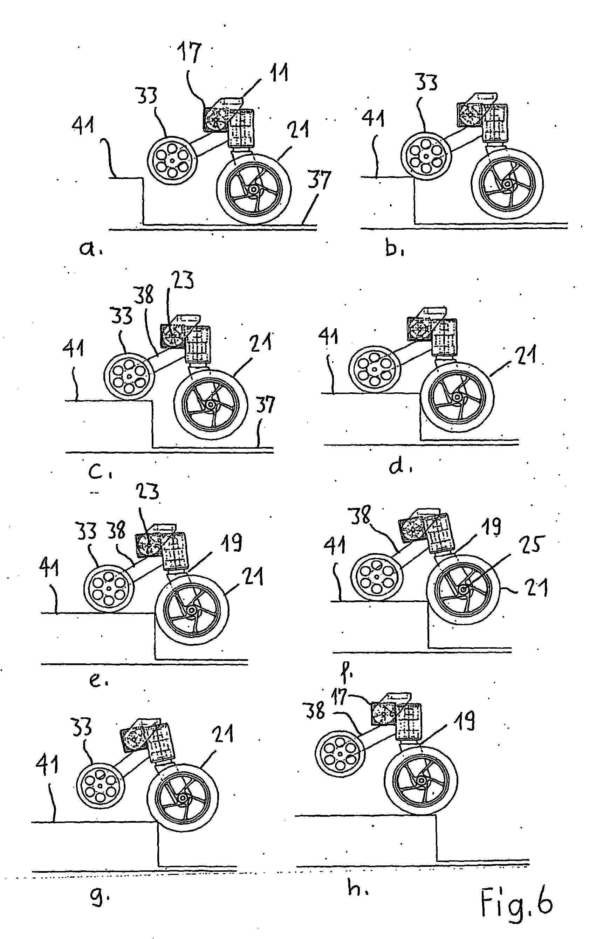

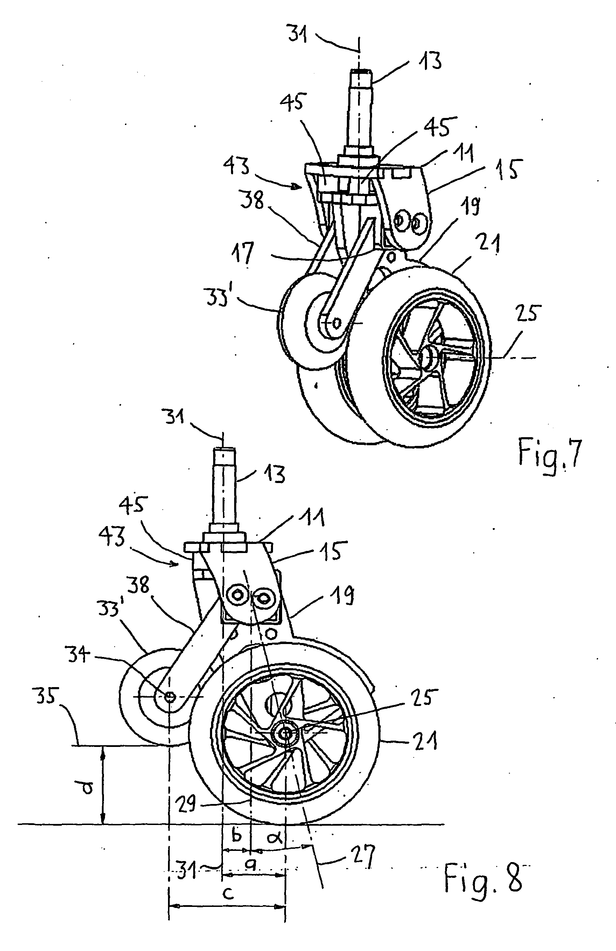

Vom hinteren Arm des Balancehebels heisst es (Seite 5, Zeilen 18 ff, Fig. 6), dass er vorzugsweise mit einer Verstell- und Federungseinrichtung verbunden ist. Diese weist einen hydraulischen Arbeitszylinder auf, der mit einer Pumpe verbunden ist, mit deren Hilfe der Balancehebel verschwenkt werden kann, um das vordere der beiden Räder anzuheben oder abzusenken. Durch Anheben wird die Bodenfreiheit vergrössert, um über hohen Pflanzenwuchs zu fahren und durch Absenken kann ein verringerter Auflagedruck der Räder auf dem Boden erreicht werden, was beim Fahren über sumpfiges Gelände von Vorteil ist. Die Federungseinrichtung wird durch einen Flüssigkeitsbehälter gebildet, der durch einen Kolben in eine Flüssigkeits- und eine Luftkammer unterteilt ist. Alternativ wird eine mechanische Federungsanordnung vorgeschlagen (Seite 7, Zeilen 23 ff, Fig. 7 bis 9), wobei ein Torsionsstab als Federelement Anwendung findet, welcher horizontal unter dem Chassis in Längsrichtung des Fahrzeugs verläuft.

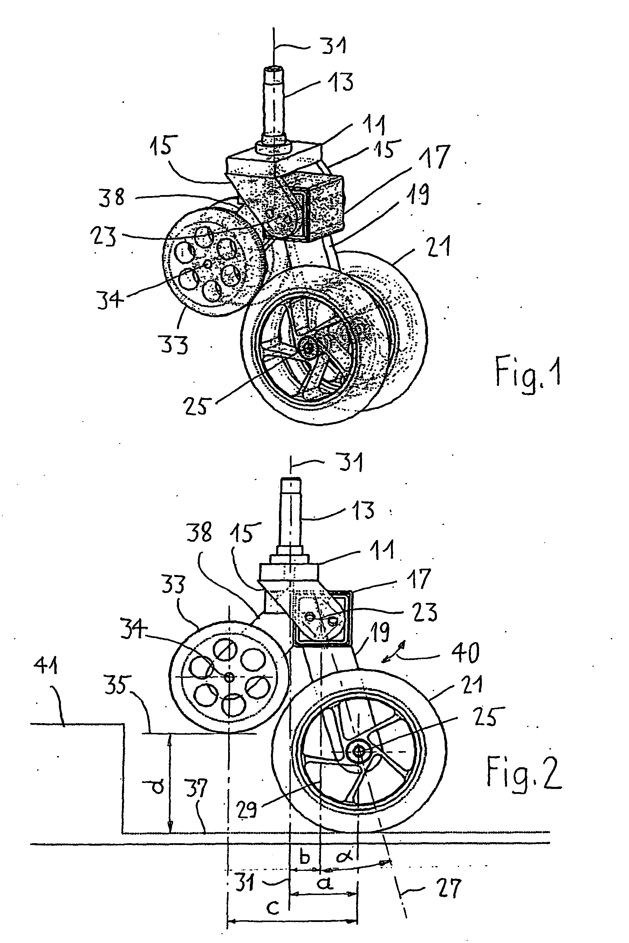

Die beschriebene Radaufhängung ist fest mit dem Chassis (Fig. 8) oder der Steuereinrichtung (Fig. 1) verbunden, besitzt also keine vertikalen Drehzapfen, um dessen Achse sie wie bei einer Schwenkradeinheit verschwenkbar wäre. Weil wie bei der vorher erwähnten FR 2 345 320 ein Drehzapfen fehlt, kann sie auch nicht einfach dadurch montiert werden, dass ein Drehzapfen in ein Lager des fahrbaren Gegenstandes eingesteckt wird, wie dies, wie eingangs beschrieben, bei handelsüblichen Schwenkradeinheiten der Fall ist. Dazu kommt, dass die Verstell- und Federeinrichtung am Chassis des Fahrzeugs befestigt werden muss. Auf jeden Fall ist es z.Bsp. nicht möglich, bei einem Rollstuhl die Schwenkradeinheiten mit Radaufhängungen der beschriebenen Art auszutauschen. Zusammenfassend kann festgehalten werden, dass die vor mehr als dreissig fahren offenbarte Radaufhängung keine Schwenkradeinheit (castor wheel) darstellt und dass diese Publikation während all den Jahren offensichtlich auch keinen Anstoss zur Verbesserung von Schwenkradeinheiten gegeben hat, dies obwohl, wie der eingangs beschriebene relevante Stand der Technik zeigt, ein Bedürfnis dafür bestand.

Es ist Aufgabe der vorliegenden Erfindung die Nachteile der beschriebenen Konstruktionen zu vermeiden.

Diese Aufgabe wird erfindungsgemäss durch einen Rollstuhl dem unabhängigen Anspruch 1 gelöst.

Ein Vorteil dieser Schwenkradeinheit besteht darin, dass sie eine kompakte Baueinheit ist, die nicht nur das horizontale Verschwenken des Schwenkrads z.Bsp. beim Wenden eines Rollstuhls erlaubt, sondern beim Anfahren eines Hindernisses auch ein Anheben des Schwenkrads bewirkt, um das Überwinden des Hindernisses zu erleichtern und zugleich Schläge zu dämpfen. Dazu kommt, dass dabei das Schwenkrad noch mehr angehoben wird, als es bei der vorher beschriebenen Verwendung von Heberädern der Fall ist, weil die horizontale Achse um den Berührungspunkt des Heberades mit dem Boden nach oben verschwenkt wird. Dies wird nachfolgend unter Bezugnahme auf die Zeichnung beschrieben. Bei einem Rollstuhl können die Schwenkräder klein dimensioniert werden, so dass mehr Freiraum für die Füsse bleibt.

Die horizontale Achse befindet sich vorteilhaft praktisch senkrecht, oder je nach den vorhandenen Platzverhältnissen nur wenig verschoben über der Achse des Schwenkrads. Dies hat den Vorteil, dass Kräfte, welche beispielsweise durch das Gewicht des Rollstuhlbenützers auf die Schwenkradeinheit ausgeübt werden, keine oder nur eine relativ geringe Kraftkomponente verursachen, welche bestrebt ist entgegen der Kraft der Feder zu wirken. Um die Kraftkomponente, welche dabei der Kraft der Federmittel entgegenwirkt klein zu halten, ist also der Winkel der Ebene, in welcher die Drehachse des Gelenks und des Schwenkrads liegen, möglichst klein, vorzugsweise 0 bis 15 Grad. Wenn es die Platzverhältnisse erfordern, kann jedoch dieser Winkel auch etwas grösser gewählt werden, etwa bis zu 30 Grad.

Vorteilhaft ist die horizontale Achse des Gelenks in einem Abstand von der Schwenkachse des Drehzapfens angeordnet. Dies ermöglicht es die Bauhöhe der Schwenkradeinheit klein zu halten aber trotzdem die Achse des Schwenkrads in ausreichender Entfernung von der vertikalen Schwenkachse des Drehzapfens anzuordnen, um ein leichtes Verschwenken entsprechend der Fahrrichtungsänderung zu ermöglichen.

Zweckmässigerweise ist der vertikale Drehzapfen an einem Support angeordnet und das Gelenk am Support ausgebildet oder in diesem angeordnet. Dies ermöglicht eine kompakte Bauweise der Schwenkradeinheit mit niedriger Bauhöhe. Eine vorteilhafte Ausgestaltung sieht vor, dass der Support zwei Arme aufweist und dass das Gelenk zwischen diesen Armen angeordnet ist. Zweckmässigerweise ist ein Anschlag vorgesehen, welcher das Ausmass einer Änderung der Winkelstellung der Arme beim Überwinden eines Hindernisses begrenzt. Eine Begrenzung der Verschwenkung kann je nach Bedarf in der einen und/oder anderen Richtung erfolgen. Als Federmittel können verschiedene Typen von Federn verwendet werden, z.Bsp. auch Schraubenfedern wie im Stand der Technik, oder Torsionsfedern. Es hat sich aber als vorteilhaft erwiesen, das Gelenk als Federgelenk auszubilden. Dieses kann beispielsweise vom Typ "ROSTA" (TM) sein, wie es bereits einleitend beschrieben wurde. Dies gestattet eine besonders kompakte Bauweise.

Der Abstand der Laufebene des Heberades und des Schwenkrades ist zweckmässigerweise gleich gross oder etwas grösser als der Radius des Schwenkrades. Dadurch wird sichergestellt, dass beim Überwinden eines relativ hohen Hindernisses das Schwenkrad soweit angehoben wird, dass es dieses Hindernis gut überwinden kann.

In vielen Fällen ist es vorteilhaft, anstelle eines Schwenkrades ein Schwenkradpaar und/ oder anstelle eines Heberades ein Heberadpaar vorzusehen. Dadurch wird das Überwinden von Hindernissen noch weiter erleichtert.

Die Erfindung betrifft auch einen motorisch antreibbaren Rollstuhl, mit mindestens einer solchen Schwenkradeinheit als Vorderrad und/oder als Hinterrad.
Einige Ausführungsbeispiele der Erfindung werden nun unter Bezugnahme auf die Zeichnungen beschrieben.

Es zeigt:
- Figur 1:: eine perspektivische Ansicht eines ersten Ausführungsbeispiels der Schwenkradeinheit,
- Figur 2:: eine Seitenansicht der Schwenkradeinheit von Figur 1 und das zu überwindende Hindernis,
- Figur 3a bis 3h:: verschiedene Phasen der Überwindung eines Hindernisses,
- Figur 4:: eine perspektivische Ansicht eines zweiten Ausführungsbeispiels,
- Figur 5:: eine weitere Ansicht der Schwenkradeinheit von Figur 4,
- Figur 6a bis 6h:: verschiedene Phasen der Überwindung eines Hindernisses,
- Figur 7:: eine perspektivische Ansicht eines dritten Ausführungsbeispiels,
- Figur 8:: eine Seitenansicht der Schwenkradeinheit von Figur 7,
- Figur 9:: eine perspektivische Ansicht einer Schwenkradeinheit wie in Fig. 7 und 8 jedoch mit verstell- und wegnehmbarem Heberad und einer Blockiereinrichtung,
- Figur 10:: eine perspektivische Ansicht einer Schwenkradeinheit mit einem Heberadpaar und einer Blockiereinrichtung.

Das in den Figuren 1 und 2 gezeigte erste Ausführungsbeispiel der Schwenkradeinheit besitzt einen Support 11, an welchem ein Drehlager, z.Bsp. ein Drehzapfen 13, ausgebildet ist, der in einem nicht gezeigten Lager des Fahrzeugs, z.Bsp. eines Rollstuhls, drehbar ist. Der Support 11 besitzt zwei Arme 15. Zwischen diesen ist ein Gelenk z.Bsp. ein Federgelenk 17 vom Typ "ROSTA" (TM), angeordnet. Am Federgelenk 17 ist ein Schwenkarm 19 befestigt an dessen freiem Ende ein Schwenkrad oder ein Schwenkradpaar 21 gelagert ist. Die horizontale Achse 23 des Federgelenks 17 und die Achse 25 des Schwenkradpaars 21 befinden sich in einer Ebene 27 (Fig. 2). Die horizontale Achse 23 befindet sich auch in einer Ebene 29 (Fig. 2), welche parallel zur vertikalen Schwenkachse 31 des Drehzapfens 13 verläuft. Damit das Schwenkrad bzw. das Schwenkradpaar 21 gut verschwenkt werden kann, muss die Achse 25 in bekannter Weise in einem gewissen horizontalen Abstand a) von der Schwenkachse 31 des Drehzapfens 13 angeordnet sein. Dafür liegen aus dem Stand der Technik Erfahrungswerte vor. Beim gezeigten Ausführungsbeispiel beträgt der Winkel Alpha zwischen der Ebene 27 und der Ebene 29 etwa 15 Grad. Dieser Winkel könnte aber auch kleiner sein oder 0 Grad sein, wenn es die Platzverhältnisse erlauben die horizontale Distanz b) zwischen der vertikalen Achse 31 und der Ebene 29 grösser zu bemessen.

Die Verwendung eines Radpaars 21 hat gegenüber der Verwendung eines Einzelrades den Vorteil, dass es das Wenden erleichtert. Insbesondere Rollstuhlfahrer schätzen, dass beim Wenden der Kraftaufwand geringer ist. Von Vorteil ist die paarige Ausbildung auch beim schrägen Anfahren eines kleinen Hindernisses, z.Bsp. eines niedrigen Randsteins, weil sich beim Auftreffen eines Rades am Hindernis das Radpaar verschwenkt. Dadurch wird die Gefahr eines Aushebens des Pneus oder der Beschädigung der Schwenkradeinheit vermieden.

In einem horizontalen Abstand c) von der Achse 25 des Schwenkrads oder des Schwenkradpaars 21 ist die Achse 34 eines Heberads oder eines Heberadpaars 33 vorgesehen. Die Laufebene 35 des Heberads oder des Heberadpaars 33 (Fig. 2) ist in einem Abstand d) über der Laufebene 37 des Schwenkradpaars 21 angeordnet. Die Proportionen zwischen den Abständen a) bis d) sind vorteilhaft etwa so wie in der Zeichnung dargestellt. Der Lagerung des Hilfsrads oder Hilfsradpaares 33 dient ein zweiter Arm 38, der am Federgelenk 17 befestigt oder mit dem Schwenkarm 19 verbunden ist. Die Arme 38 und 19 bilden so einen Winkelhebel, der wie der Pfeil 40 in Figur 2 zeigt, um die Achse 23 entgegen der Federkraft des Federgelenks 17 verschwenkbar ist. Das mögliche Ausmass dieser Verschwenkung wird durch einen bei diesem Ausführungsbeispiel nicht gezeigten Anschlag begrenzt.

Beim Überfahren eines relativ grossen Hindernisses ist es das Heberad oder Heberadpaar 33, das zuerst in Kontakt mit dem Hindernis kommt. Hier bietet die Verwendung eines Radpaars 33 beim schrägen Anfahren des Hindernisses den gleichen Vorteil, welcher ein Schwenkradpaar beim Überfahren eines kleinen Hindernisses bildet. Trifft ein Rad des Heberadpaars 33 am Hindernis auf, so erfolgt eine Verschwenkung um die Schwenkachse 31, so dass beide Räder des Heberadpaars 33 und später des Schwenkradpaars 21 gleichzeitig über das Hindernis steigen und die Gefahr eines Aushebens des Pneus oder einer Beschädigung der Schwenkradeinheit vermieden wird.

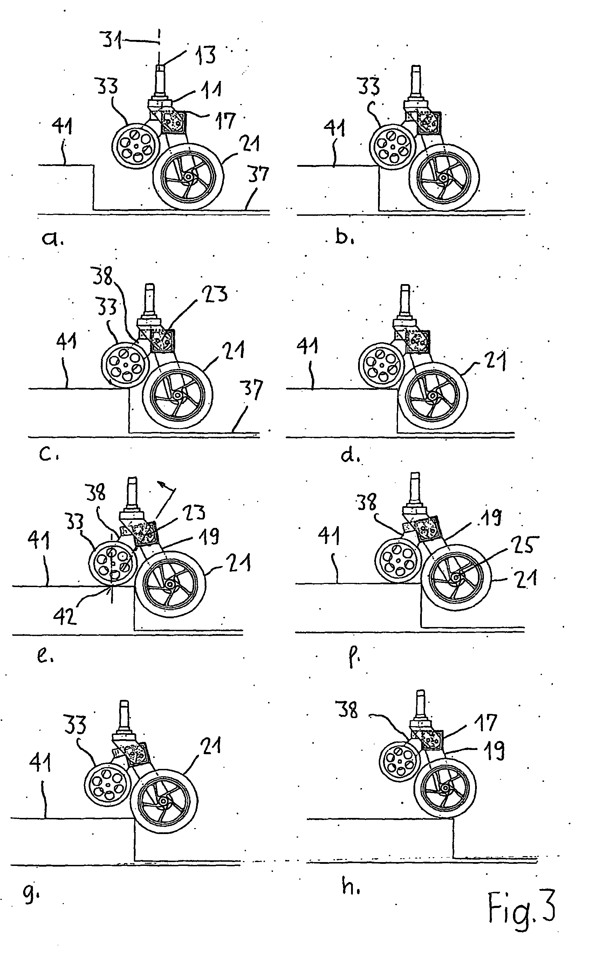

Unter Bezugnahme auf Figur 3 wird nun die Wirkungsweise der Schwenkradeinheit gemäss den Figuren 1 und 2 beschrieben. Es kann dabei angenommen werden, dass es sich dabei z.Bsp. um das Vorderrad oder die Vorderräder eines Rollstuhls handelt, mit welchem der Benützer das Hindernis 41 überwinden möchte. Es ergeben sich dabei folgende Phasen:
a) Die Schwenkradeinheit nähert sich dem Hindernis 41, z.Bsp. dem Bordstein,
b) Das Heberad 33 macht Kontakt mit dem Hindernis 41,
c) Das Heberad 33 steigt auf das Hindernis 41 und hebt den Vorderteil des Rollstuhls etwas in die Höhe, sodass das Schwenkrad 21 Kontakt mit dem Boden 37 verliert. Dabei entstehen Kräfte, welche bestrebt sind, den zweiten Arm 38 um die Achse 23 im Uhrzeigersinn zu verschwenken. Das Ausmass der Verschwenkung wird jedoch durch einen nicht eingezeichneten Anschlag begrenzt.
d) Das Schwenkrad 21 schlägt am Hindernis 41 an,
e) Der Schwenkarm 19 wird verschwenkt, sodass das Schwenkrad 21 weiter angehoben wird. Gleichzeitig wird die Achse 23 um den Punkt 42 verschwenkt, also dem Berührungspunkt des Heberades 33 mit dem Boden, was ein zusätzliches Anheben des Schwenkrads 21 bewirkt.
f) Der Schwenkarm 19 wird zusammen mit dem zweiten Arm 38 weiter verschwenkt, sodass die Achse 25 des Schwenkrads 21 sich über der Hinderniskante befindet und somit das Schwenkrad 25 drehen kann.
g) Das Schwenkrad 21 fährt über das Hindernis 41 hoch und das Heberad 33 verliert Bodenkontakt,
h) Das Schwenkrad 21 befindet sich nun auf dem Hindernis 41 und der Schwenkarm 19 und der zweite Arm 38 schwenken durch die Kraft des Federgelenks 17 wieder in die Ausgangslage zurück.

Nach dieser Betrachtung der Überwindung eines Hindernisses, sei darauf hingewiesen, dass die Schwenkradeinheit auch beim Herunterfahren Vorteile bietet. Beim Herunterfahren wirken erhebliche Kräfte auf die Schwenkradeinheit ein, so dass der Schwenkarm 19 stark nach oben verschwenkt wird und sich somit das Vorderteil des Fahrzeugs nach unten bewegt. Diese Abwärtsbewegung wird jedoch dadurch gestoppt, dass das Heberad 33 Bodenkontakt macht. Im Gegensatz zu einem handelsüblichen Schwenkrad besteht keine Gefahr, dass das Fahrzeug um die Achse 25 des Schwenkrads 21 nach vom kippen kann.

Die Gefahr eines nach vorn Kippens um die Achse 34 des Heberads 33 ist gering, weil sich dieses in Fahrrichtung weiter vorn befindet. Durch die Verwendung der beschriebenen Schwenkradeinheit wird somit die Stabilität des Fahrzeugs erhöht.

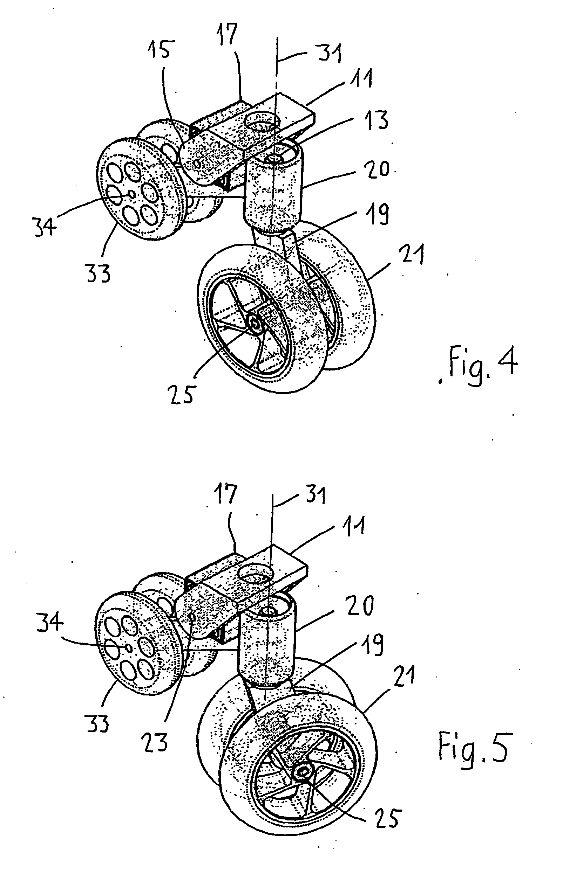

Das in den Figuren 4 und 5 gezeigte zweite Ausführungsbeispiel der Schwenkradeinheit unterscheidet sich vom vorher beschriebenen Ausführungsbeispiel im Wesentlichen dadurch, dass der Schwenkarm 19 des Schwenkradpaars 21 nicht starr sondern gelenkig mit dem Federgelenk 17 verbunden ist. Zu diesem Zweck ist ein Drehzapfen 13 am Schwenkarm 19 ausgebildet und in einem Lager 20 drehbar, das am Federgelenk 17 befestigt ist. Dies hat zur Folge, dass - im Gegensatz zum Ausführungsbeispiel gemäss den Figuren 1 und 2 - nur das Schwenkrad 21 allein bei einer Kurvenfahrt ausgelenkt wird, wie dies aus Figur 5 ersichtlich ist. Wie jedoch ein Vergleich der Figuren 3 und 6 zeigt, ist die Wirkungsweise beim Überwinden eines Hindernisses in beiden Fällen dieselbe, so dass auf die Beschreibung der Figur 3 verwiesen werden kann.

Das in den Figuren 7 und 8 gezeigte Ausführungsbeispiel der Schwenkradeinheit unterscheidet sich von dem in den Figuren 1 bis 3 gezeigten Ausführungsbeispiel vor allem dadurch, dass nicht ein Heberadpaar sondern nur ein einzelnes Heberad 33' vorhanden ist und dass dieses Heberad 33' in den Zwischenraum zwischen den Rädern des Schwenkradpaars 21 eingreift. Dies macht die Schwenkradeinheit sehr kompakt und erleichtert die Bewegung des Rollstuhls oder andersweitigen Fahrzeugs in engen Räumen. Es hat sich als zweckmässig erwiesen, die Laufebene 35 des Heberads 33' etwas tiefer anzuordnen als bei der Verwendung eines Heberadpaars. Der Abstand d) entspricht vorteilhaft etwa dem Radius des Schwenkradpaars 21. Dadurch wird gewährleistet, dass das Heberad 33 beim Herunterfahren von einem Hindernis rechtzeitig Bodenkontakt macht und damit die Kipp-Gefahr vermieden wird, wie dies bereits vorher unter Bezug auf die Figuren 1 und 2 beschrieben wurde.

Bei diesem Ausführungsbeispiel ist auch der in den vorangehenden Figuren nicht sichtbare Anschlag 43 ersichtlich, der beispielsweise aus einem oder mehreren Blöcken 45 elastomeren Materials besteht Dadurch kann der Komfort erhöht werden, der ein Rollstuhl bietet, denn der Anschlag 43 dämpft den beim Anfahren des Heberads 33' auf das Hindernis 41 (Fig. 3b) entstehenden Schlag und erlaubt nur eine begrenzte Verschwenkung des zweiten Arms 38 im Uhrzeigersinn, um ein Abheben des Schwenkradpaars 21 zu gestatten (Fig. 3c).

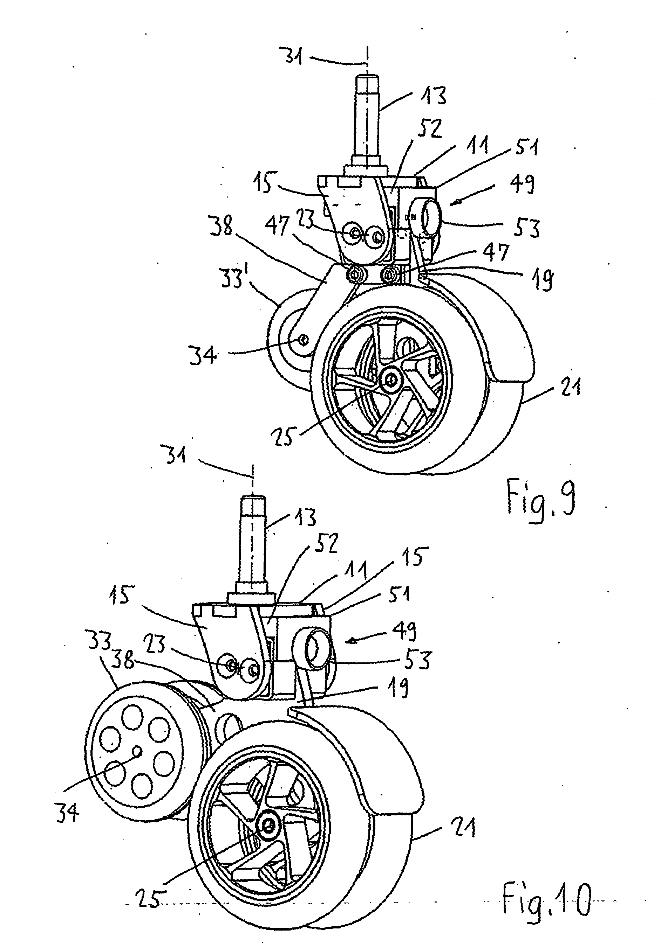

Die Schwenkradeinheit von Fig. 9 ist praktisch gleich ausgebildet wie jene von Fig. 8, unterscheidet sich jedoch dadurch, dass das Heberad 33' verstellbar und wegnehmbar angeordnet ist. Zu diesem Zweck ist der Arm zweite 38 mit Schrauben 47 am Schwenkarm 19 befestigt. Dies ermöglicht z.Bsp. eine flexible Nutzung des Rollstuhls. So kann die Distanz d (Fig. 8) den Bedürfnissen des Benützers angepasst werden. Ferner, soll z.Bsp. ein Rollstuhl nur im Innenbereich verwendet werden, kann das Heberad 33' entfernt werden.

Die Figur 9 zeigt ferner die Möglichkeit, das Federgelenk 17 mit einer Blockiereinrichtung 49 z.Bsp. beim Sport mit dem Rollstuhl zu blockieren. Die Blockiereinrichtung 49 besteht aus einem Winkelstück 51, welches mit einem Arm 52 in den Raum zwischen Support 11 und dem Federgelenk 17 eingreift und mit einer von Hand drehbaren Schraube 53 befestigt ist. Es ist aber auch möglich die Blockiereinrichtung 49 anders auszugestalten, z. Bsp. so dass sie einen regulierbaren Anschlag bildet und erst in einer Endstellung eine Blockierung bewirkt.

Figur 10 zeigt eine Schwenkradeinheit wie in Fig. 9. Der zweite Arm 38 ist jedoch nicht wegnehmbar und als Heberad ist ein Radpaar 33 vorgesehen.

Es sind verschiedene weitere Änderungen möglich ohne vom Grundkonzept der Erfindung abzuweichen. So können z.Bsp. wie im Stand der Technik, Schwenkrad und Heberad seitlich versetzt angeordnet sein, so dass sie von der Seite betrachtet überlappen. Ebenso können zwei oder mehr Heberäder zur Anwendung gelangen. Auch wäre es denkbar andere Kräfte als die Kraft von Federmitteln zu benützen. Zusammenfassend kann folgendes festgehalten werden:

Die Schwenkradeinheit eines Rollstuhls besitzt einen Support 11 mit einem vertikalen Drehzapfen 13, der in einem Lager des Rollstuhls oder eines anderen Geräts gelagert ist, um beim Kurvenfahren oder Wenden eine Verschwenkung des Schwenkarms 19 zu erlauben, an dessen Ende das Schwenkrad 21 drehbar gelagert ist. Ein Gelenk 17 erlaubt auch eine Bewegung um eine horizontale Achse 23 entgegen der Kraft von Federmitteln, wenn das Schwenkrad 21 an einem Hindernis 41 anstösst. Das Gelenk 17 ist ein Federgelenk und hält den Schwenkarm 19 in der gezeigten Normalstellung, solange kein Hindernis 41 auftritt. Vor dem Schwenkrad 21, aber erhöht, befindet sich ein Heberad 33, das zur Überwindung eines Hindernisses das Schwenkrad 21 zuerst anhebt, wobei dann, wenn das Schwenkrad 21 am Hindernis 41 anstösst, der Schwenkarm 19 verschwenkt wird und das Schwenkrad 21 weiter angehoben wird. Da auch der Arm 38 des Heberads 33 mitverschwenkt wird, wird dadurch die horizontale Achse 23 angehoben, was ein zusätzliches Anheben des Schwenkrads 21 bewirkt. Sobald die Achse 25 des Schwenkrads 21 höher als das Hindernis 41 zu liegen kommt, kann das Schwenkrad 21 auf das Hindernis 41 steigen.

## Patentansprüche

1. Rollstuhl, insbesondere motorisch antreibbarer Rollstuhl, mit
- einem um eine vertikale Schwenkachse (31) horizontal frei verschwenkbaren ersten Arm (19), an welchem ein Schwenkrad (21) angeordnet ist, dessen Achse (25) sich in einem horizontalen Abstand (a) von der vertikalen Schwenkachse (31) befindet,
- und in Fahrtrichtung des Rollstuhls vor dem Schwenkrad (21) einem Heberad (33), das an einem zweiten Arm (38) angeordnet ist, wobei eine Laufebene (35) des Heberades (33) gegenüber einer Laufebene (37) des Schwenkrads angehoben ist,
**dadurch gekennzeichnet,**
**dass** das Schwenkrad (21), das Heberad (33) und ein gemeinsamer Support (11) zusammen eine Schwenkradeinheit bilden, dass mindestens eine solche Schwenkradeinheit als Vorderrad und/oder als Hinterrad vorhanden ist, und
**dass** das Schwenkrad (21) und das Heberad (33) zusammen entgegen der Kraft von Federmitteln (17) um eine horizontale Achse (23) gegenüber dem Support (11) verschwenkbar sind.

2. Rollstuhl nach Anspruch 1, **dadurch gekennzeichnet, dass** die genannte horizontale Achse (23) an einer Stelle angeordnet ist, die sich in der Vertikalen über und in Horizontalen zwischen den Achsen (34, 25) des Heberads (33) und des Schwenkrads (21) befindet.

3. Rollstuhl nach Anspruch 1 oder 2, **dadurch gekennzeichnet, dass** als Federmittel ein Federgelenk (17) dient und dass die genannte horizontale Achse (23) durch die Achse des Federgelenks (17) gebildet ist

4. Rollstuhl nach Anspruch 3, **dadurch gekennzeichnet, dass** der Support (11) zwei Arme (15) aufweist, zwischen welchen das Federgelenk (17) angeordnet ist.

5. Rollstuhl nach einem der Ansprüche 1 bis 4, **dadurch gekennzeichnet, dass** die genannte horizontale Achse (23) in einem Abstand (b) hinter der vertikalen Schwenkachse (31) angeordnet ist.

6. Rollstuhl nach einem der Ansprüche 1 bis 5, **dadurch gekennzeichnet, dass** die Ebene (27), in welcher sich die genannte horizontale Achse (23) und die Achse (25) des Schwenkrads (21) befinden, in einem Winkel von 0 bis 30 Grad, zur genannten vertikalen Schwenkachse (31) angeordnet ist.

7. Rollstuhl nach einem der Ansprüche 1 bis 6, **dadurch gekennzeichnet, dass** der Support (11) ein Drehlager, z.Bsp. einen Drehzapfen (13), aufweist, der in ein Lager des fahrbaren Gegenstandes passt, um eine Verschwenkung des Schwenkrads (21) um die Schwenkachse (31) zu ermöglichen.

8. Rollstuhl nach einem der Ansprüche 3 bis 6, **dadurch gekennzeichnet, dass** der erste Arm (19) mit dem Schwenkrad (21) in einem am Federgelenk (17) angeordneten Lager (20) um die Schwenkachse (31) verschwenkbar gelagert ist.

9. Rollstuhl nach einem der Ansprüche 1 bis 8, **dadurch gekennzeichnet, dass** ein Anschlag (43), z.Bsp. ein Block (45) aus elastomerem Material, vorgesehen ist, welcher im Betrieb das Ausmass der Verschwenkung um die genannte horizontale Achse (23) in der einen und/oder anderen Richtung begrenzt

10. Rollstuhl nach einem der Ansprüche 1 bis 9, **dadurch gekennzeichnet, dass** der Abstand (d) zwischen der Laufebene (35) des Heberades (33) und der Laufebene (37) des Schwenkrades (21) gleich gross oder etwas grösser als der Radius des Schwenkrades (21) ist.

11. Rollstuhl nach einem der Ansprüche 1 bis 10, **dadurch gekennzeichnet, dass** sie anstelle eines Schwenkrades (21) ein Schwenkradpaar und/oder anstelle eines Heberades (33) ein Heberadpaar aufweist.

12. Rollstuhl nach einem der Ansprüche 1 bis 11, **dadurch gekennzeichnet, dass** der zweite Arm (38) mit dem Heberad (33,33') wegnehmbar und/oder verstellbar angeordnet ist.

13. Rollstuhl nach einem der Ansprüche 1 bis 12, **dadurch gekennzeichnet, dass** eine Blockiereinrichtung (49) zur Blockierung der Verschwenkung des ersten Armes (19) vorgesehen ist.

14. Rollstuhl nach einem der Ansprüche 1 bis 13, **gekennzeichnet durch** mindestens eine Schwenkradeinheit als Vorderrad und/oder als Hinterrad.

## Claims

1. A wheel chair, especially a motor driveable wheel chair comprising
- a first arm (19) which may be freely pivoted horizontally about a vertical pivot axis (31), and on which a swivel wheel (21) is arranged, whose axis (25) is located at a horizontal distance (a) from the vertical pivot axis (31); and
- a lifting wheel (33) arranged on a second arm in front of the swivel wheel (21) towards driving direction, wherein a running plane (35) of the lifting wheel (33) is lifted towards a running plane (37) of the swivel wheel (21),
**characterised in**
**that** the swivel wheel (21), the lifting wheel (33) and a common support (11) together form a swivel wheel unit, in that at least one of such a swivel wheel unit is used as a front wheel and/or as a back wheel, and in that the swivel wheel (21) together with the lifting wheel (33) may be pivoted about a horizontal axis (23) relatively to the support (11) against the force of spring means (17).

2. A wheel chair according to claim 1, **characterised in that** said horizontal axis (23) is arranged at a location, which in the vertical, is located above, and in the horizontal, between the axes (34, 25) of the lifting wheel (33) and of the swivel wheel (21).

3. A wheel chair according to claim 1 or 2, **characterised in that** the spring comprises a spring joint (17), and that said horizontal axis (23) is formed by the axis of the spring joint (17).

4. A wheel chair according to claim 3, **characterised in that** the support (11) comprises two arms (15), between which the spring joint (17) is arranged.

5. A wheel chair according to one of the claims 1 to 4, **characterised in that** said horizontal axis (23) is arranged at a distance (b) behind the vertical axis (31).

6. A wheel chair according to one of the claims 1 to 5, **characterised in that** the plane (27) in which said horizontal axis (23) and the axis (25) of the swivel wheel (25) are located, is arranged at an angle of 0 to 30 degrees, to the vertical pivot axis (31).

7. A wheel chair according to one of the claims 1 to 6, **characterised in that** the support (11) comprises a rotation bearing for example a rotation pin (13) which fits into a bearing of a traveling object, in order to permit a pivoting of the swivel wheel (21) about the pivot axis (31).

8. A wheel chair according to one of the claims 3 to 6, **characterised in that** the first arm (19) with the swivel wheel (21) is pivotably mounted in a bearing (20) arranged on the spring joint (17), about the pivot axis (31).

9. A wheel chair according to one of claims 1 to 8, **characterised in that** an abutment (43), for example a block (45) of elastomeric material, is provided, which in operation limits the extent of the pivoting about the mentioned horizontal axis (23) in the one and/or the other direction.

10. A wheel chair according to one of the claims 1 to 9, **characterised in that** the distance (d) between the running plane (35) of the lifting wheel (33), and the running plane (37) of the swivel wheel (21) is equally large or somewhat larger than the radius of the swivel wheel (21).

11. A wheel chair according to one of the claims 1 to 10, **characterised in that** the wheel chair comprises a swivel wheel pair instead of the swivel wheel (21) and/or a lifting wheel pair instead of the lifting wheel (33).

12. A wheel chair according to one of the claims 1 to 11, **characterised in that** the second arm (38) with the lifting wheel (33, 33') is arranged in at least one of a removable and/or adjustable manner.

13. A wheel chair according to one of the claims 1 to 12, **characterised in that** a blocking device ( 49) is provided for blocking the pivoting of the first arm (19).

14. The wheel chair according to one of the claims 1 to 13, **characterised in** at least one swivel wheel unit as a front wheel and/or as a rear wheel.

## Revendications

1. Fauteuil roulant, en particulier fauteuil roulant pouvant être entraîné par un moteur, avec
- un premier bras (19) pivotant librement horizontalement autour d'un axe de pivotement vertical (31), bras sur lequel une roue pivotante (21) est placée dont l'axe (25) se trouve à un écart horizontal (a) de l'axe de pivotement vertical (31)
- et une roue de levage (33) dans le sens de la marche du fauteuil roulant devant la roue pivotante (21), roue de levage qui est placée sur un second bras (38), un plan de marche (35) de la roue de levage (33) étant élevé par rapport à un plan de marche (37) de la roue pivotante,
**caractérisé en ce**
**que** la roue pivotante (21), la roue de levage (33) et un support commun (11) forment ensemble une unité de roue pivotante, qu'il existe au moins une telle unité de roue pivotante comme roue de devant et/ou comme roue de derrière et que la roue pivotante (21) et la roue de levage (33) sont pivotantes ensemble par rapport au support (11) à l'encontre de la force de moyens à ressort (17) autour d'un axe horizontal (23).

2. Fauteuil roulant selon la revendication 1, **caractérisé en ce que** ledit axe horizontal (23) est placé à un endroit qui se trouve à la verticale au-dessus et à l'horizontale entre les axes (34, 25) de la roue de levage (33) et de la roue pivotante (21).

3. Fauteuil roulant selon la revendication 1 ou 2, **caractérisé en ce qu'**une articulation à ressort (17) sert de moyen à ressort et que ledit axe horizontal (23) est formé par l'axe de l'articulation à ressort (17).

4. Fauteuil roulant selon la revendication 3, **caractérisé en ce que** le support (11) présente deux bras (15) entre lesquels l'articulation à ressort (17) est placée.

5. Fauteuil roulant selon l'une des revendications 1 à 4, **caractérisé en ce que** le dit axe horizontal (23) est placé à un écart (b) derrière l'axe de pivotement vertical (31).

6. Fauteuil roulant selon l'une des revendications 1 à 5, **caractérisé en ce que** le plan (27) dans lequel ledit axe horizontal (23) et l'axe (25) de la roue de pivotement (21) se trouvent est placé à un angle de 0 à 30 degrés par rapport audit axe de pivotement vertical (31).

7. Fauteuil roulant selon l'une des revendications 1 à 6, **caractérisé en ce que** le support (11) présente un coussinet de pivotement, par exemple un tourillon (13), qui rentre dans un palier de l'objet mobile pour permettre un pivotement de la roue pivotante (21) autour de l'axe pivotant (31).

8. Fauteuil roulant selon l'une des revendications 3 à 6, **caractérisé en ce que** le premier bras (19) avec la roue pivotante (21) est positionné pivotant autour de l'axe pivotant (31) dans un palier (20) placé sur l'articulation à ressort (17).

9. Fauteuil roulant selon l'une des revendications 1 à 8, **caractérisé en ce qu'**il est prévu une butée (43), par exemple un bloc (45) en un matériau élastomère, qui délimite l'ampleur du pivotement autour dudit axe horizontal (23) dans l'un et/ou l'autre sens.

10. Fauteuil roulant selon l'une des revendications 1 à 9, **caractérisé en ce que** l'écart (d) entre la plan de marche (35) de la roue de levage (33) et le plan de marche (37) de la roue pivotante (21) est de la même grandeur ou un peu plus grand que le rayon de la roue pivotante (21).

11. Fauteuil roulant selon l'une des revendications 1 à 10, **caractérisé en ce qu'**il présente, à la place d'une roue pivotante (21), une paire de roues pivotantes et/ou, à la place d'une roue de levage (33), une paire de roues de levage.

12. Fauteuil roulant selon l'une des revendications 1 à 11, **caractérisé en ce que** le second bras (38) est placé en pouvant être enlevé et/ou pouvant être ajusté avec la roue de levage (33, 33').

13. Fauteuil roulant selon l'une des revendications 1 à 12, **caractérisé en ce qu'**il est prévu un dispositif de blocage (49) pour bloquer le pivotement du premier bras (19).

14. Fauteuil roulant selon l'une des revendications 1 à 13, **caractérisé par** au moins une unité de roue pivotante comme roue de devant et/ou roue de derrière.
